# EUROPEAN PATENT APPLICATION

(11) **EP 1 203 967 A1**
(43) Date of publication of application: **08.05.2002**
(21) Application number: 00811027.2
(22) Date of filing: 03.11.2000
(51) Int. Cl.: G02B 5/30, G02F 1/1335

(54) **Polarizing film**

(71) Applicant: Rolic AG, 6301 Zug (CH)
(72) Inventor: Moia, Franco, 4402 Frenkendorf (CH); Schadt, Martin, 4411 Seltisberg (CH); Seiberle, Hubert, 79576 Weil am Rhein (DE)
(74) Representative: Liebetanz, Michael, Dipl.-Phys.

(57) **Abstract**

A polarizer film comprises a liquid crystal polymer (LCP) layer (16) containing dichroic molecules (30). The polarizer film (1) consists of a transfer foil (13; 3, 4) and a polarizer (6) comprising said liquid crystal polymer (LCP) layer (16). It is possible to manufacture uniform as well as high and/or low information content structured polarizers. The invention particularly simplifies off-line manufacturing of polarizers and improves in many applications the mounting process of the polarizers into the final product.

## Description

The invention relates to a polarizer film.

Such polarizers are for instance used in connection with liquid crystal displays (LCDs) and display screens in general, but also in the fields of document security (banknotes, stamps, cards and ticket applications, etc.), brand protection (pharmaceuticals, flavours, liquors, etc.), secure packaging of articles, software, spare parts for vehicles, etc. or packaging therefor. However, the invention is not limited to such fields.

Known, commercially available polarizers are mainly made by stretching plastic films that contain iodine chromophores or dichroic dyes.

A different type of polarizers is made of liquid crystal polymers (LCP) containing dichroic dyes. By choosing suitable dichroic dyes and, if necessary, combining two or more dyes, the polarizer can be color selective (e.g. blue, red, yellow, etc.) or black.

A known technique for the production of such dichroic LCP polarizers is the use of photo-orientable orientation layers, in particular linear photo-polymerization (LPP) orientation layers (synonymous with photo-orientable polymer network (PPN) in other literature), for the alignment of the LCP. With photo-orientable orientation layers, non-structured and advantageously also structured (patterned) polarizers can be made. Non-structured or structured polarizers made by the LPP/LCP technology are called LPP/LCP polarizers, a term which is also used for the purpose of this specification. Background and examples of such polarizers are disclosed in, for example, US-5,389,698, US-5,602,661, EP-A-0 689 084, EP-A-0 756 193, WO-A-98/52077, all of the applicant.

The fitting or mounting of the polarizer onto other parts presents a problem in many applications, technically and economically.

It is therefore an object of the invention to provide a new polarizer, which improves manufacturing and applicability.

A polarizer film according to the invention consists of a transfer foil comprising a liquid crystal polymer (LCP) layer containing dichroic molecules.

Surprisingly and despite of its aligned liquid crystalline molecular configuration, the LCP layer containing dichroic molecules can be transferred to a surface, for instance by hot-stamping, without loosing its polarizing properties and pattern (if present).

Common transfer foils are known from several application fields, mainly from the printing and decorating industry. They consist of at least two layers, namely a carrier layer and a release layer. If required, a (protective) lacquer layer is added. On top of the foil - on the release layer side - an 'object' to be transferred is applied, and usually also a suitable adhesive is applied on top of the 'object'. Another possibility would be to apply the adhesive not on the transfer foil but on the substrate onto which the 'object' is to be transferred. Through a specific process like hot stamping, the release layer may be released thus enabling the removal and transfer of the 'object' from the carrier layer onto an other surface/substrate. Background information regarding transfer foils or transfer tapes respectively can be found for example in US-3,961,121 and US-5,827,603.

Within the teaching of the invention, the 'object' comprises at least a liquid crystal polymer (LCP) layer containing dichroic molecules.

Preferably, the liquid crystal polymer (LCP) layer is photo-aligned.

Advantageously, the liquid crystal polymer (LCP) layer is in contact with a layer of linearly photo-polymerizable material (LPP) exhibiting selective orientation, which was used for aligning the LCP material during the manufacturing of the polarizer.

Preferably, the polarizer is structured, i.e. has a pattern of areas with differing polarization directions (different mean orientation of the dichroic molecules).

The transfer foil may also comprise further layers, for example further optically effectual films or protective lacquers. As an example, one or more additional LCP layers containing dichroic molecules could be present, or further structured or non-structured LCP layers, such as λ/4 plates, λ/2 plates, cholesteric layers, etc., could be superimposed to the polarizer. This opens many possibilities of different optical effects, some of which are for instance described in WO-A-98/52077 and WO-A-00/29878.

One advantage of the invention resides in the possibility to manufacture uniform as well as high and/or low information content structured polarizers. These have been formed on transfer foils and transferred onto different kinds of substrates.

The invention particularly simplifies off-line manufacturing of polarizers and improves in many applications the mounting process of the polarizers into the final product.

The new approach opens also innovative possibilities in various application fields. One interesting application could be the improvement of the wavelength dependence of standard polarizers by transferring to the latter coloured polarizers with adapted transmission characteristics. *[Anm: this could be developed more thoroughly within description (and claims) and can broaden the application]*

Another possibility is the use of the polarizer as information content optical variable security elements. The high optical resolution that is possible with LPP/LCP polarizers, allows to transfer from the transfer foil even high information content images like photographic pictures or alpha-numeric characters.

These and other objects, features and advantages of the invention will become more apparent in light of the following detailed description of embodiments thereof, as illustrated in the accompanying drawings, in which:
- Fig. 1: is a schematic view of the transfer foil containing the LPP/LCP polarizer and adhesive,
- Fig. 2: shows in more detail a structured LPP/LCP polarizer on a transfer foil; the LPP alignment layer is very thin and essentially optically not active,
- Fig. 3: is a schematic view of a dichroic dye molecule with an extinction in y-axis direction, and
- Fig. 4: shows the working principle of a photo-structured LPP/LCP dichroic linear polarizer using dichroic dye molecules embedded in an LCP layer.

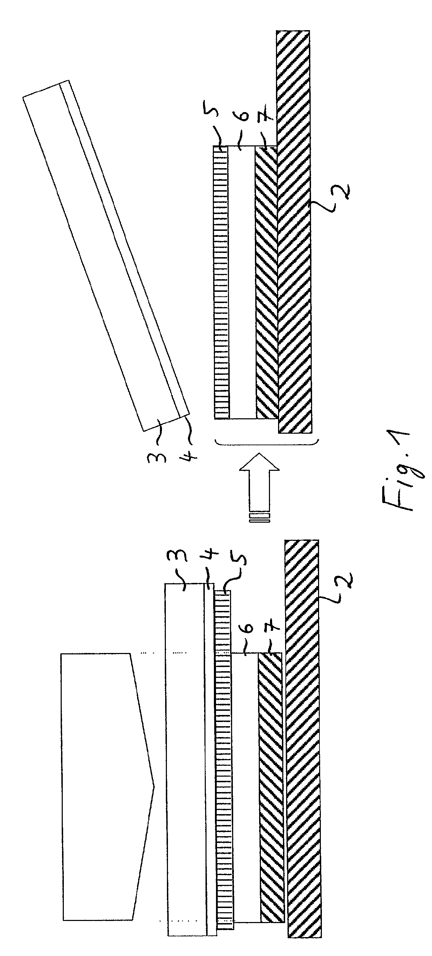

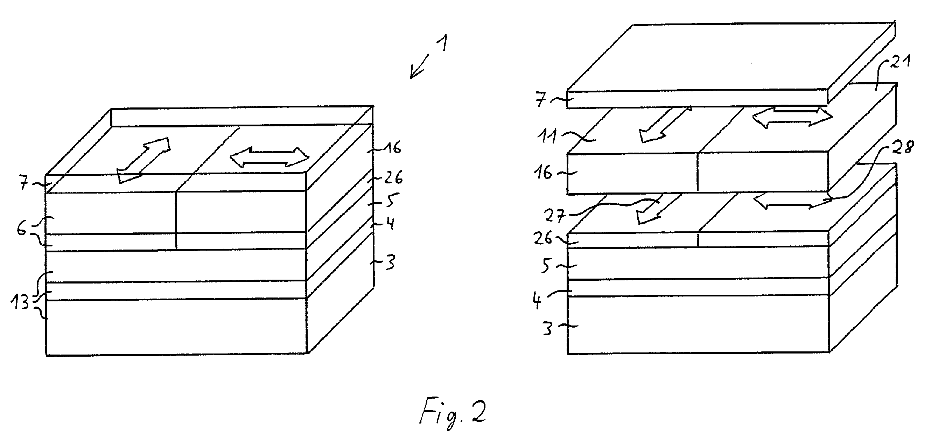

Fig. 2 illustrates an example of a polarizer film according to the invention in the form of a transfer foil polarizer 1. Fig. 1 shows how the foil polarizer 1 of Fig. 2 can be transferred, e.g. by hot-stamping, to a substrate 2. Such a substrate 2 can be paper, plastic, glass, other polarizers, metal, etc..

As can be seen in Fig. 2, the polarizer consists of a polyester carrier 3, a release layer 4, a lacquer layer 5 (optional), a linear LPP/LCP dichroic polarizer 6, and an adhesive layer (optional) 7. Carrier 3 and release layer 4 are elements of a typical transfer foil 13, whereas the LCP layer 16 of the LPP/LCP dichroic polarizer 6 is a liquid crystal polymer (LCP) layer 16 containing dichroic molecules 30, and the LPP layer 26 is present because it is used to align the LCP 16 during the production of the polarizer 6. For the LCP 16 and the LPP layer 26 two areas 11, 21 having different orientation directions are shown as a simple example of a structure or pattern of the polarizer 6. It is, however, understood that the polarizer 6 as well can be uniform, i.e. with a single orientation direction.

The techniques used to produce the polarizer 6 are described in the list of patent documents given above and are further explained below.

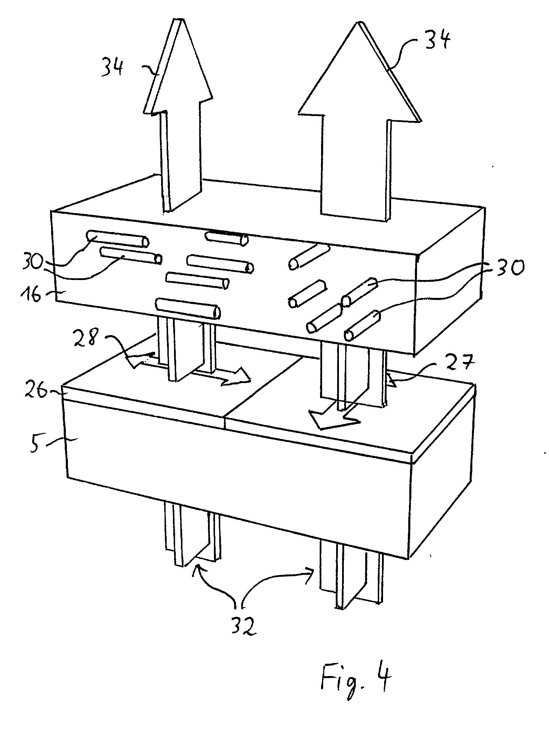

A layer of a suitable orientable linearly photo-polymerisable (LPP) material such as cinnamic acid derivatives or ferulic acid derivatives was applied to the lacquer side 5 of a commercially available transfer foil 13. The lacquer layer 5 is not absolutely necessary. It is also possible to apply the LPP layer 26 directly onto the release layer 4. Then, the LPP layer 26, having a thickness of about 50 nm, was exposed through a photo mask to linearly polarized UV light of different polarization directions, e.g. using exposures parallel (0°) and perpendicular (90°) to the edges of the device illustrated in Figures 2 and 4. For the simpler non-structured case the mask is not necessary and only one exposure step to linear polarized UV light is needed. It is also possible to use a photo-polarization mask as described in EP-A-0 753 785 of the applicant.

Thereafter, the LPP layer 26 is oriented according to arrows 27 and 28 in Fig. 2. The LPP layer 26 was then coated with a cross-linkable liquid crystal monomer or pre-polymer mixture, which contained dichroic dye molecules (of the same or different kind depending on the desired extinction). The LCP mixture and the dichroic dyes used are described in more details later. The thickness of the dried dichroic LCP layer is preferably between 0.5 to 8 micrometers. The LCP material was applied onto the LPP layer 26 by kbar-coating (wire coater) but also spin-coating and other printing or coating techniques are applicable.

The orientation of the LPP layer 26 aligns the LCP material (and therewith its optical axes) accordingly, and with it also the dichroic dyes are being aligned accordingly to the LCP alignment. The LCP layer 16 containing the dichroic dyes was then exposed to non-polarized (isotropic) UV light of suitable wavelength to be cross-linked. After this step, the dichroic LCP layer forms a structured (or for the mono-axial case non-structured) linear polarizer 6.

Finally, this aligned and cross-linked dichroic LCP layer 16 was coated with a suitable heat-sensitive adhesive 7 which is commonly used for hot-stamping processes. The adhesive layer 7 was applied with a kbar-coater (wire coater) with kbar no. 4 which usually leads to wet layer thickness of around 36 micrometers. The adhesive layer 7 was then dried for 1 hour at room temperature. This drying time can be shorten if higher temperatures are applied. The thickness of the adhesive layer 7 was roughly below 6 micrometers.

This completes the off-line manufacture of the LPP/LCP dichroic polarizer film 1.

The LPP/LCP dichroic polarizer 6 was then successfully transferred by a hot stamping process to commercially available plastic films such as tri-acetate cellulose films (e.g. TAC films from Lofo), and also to standard sheet polarizers (as e.g. HS42 from Polaroid) at a transfer temperature of about 130 °C (transfer temperature range: 120 °C - 140 °C). The duration of the transfer process was below 0.5 seconds.

Apart from the use in optical devices such as displays, structured polarizers may also be used as an image carrier themselves. The information, image or pattern of a structured LPP/LCP dichroic polarizer 6 transferred on a TAC film is almost invisible when viewed perpendicularly to the substrate. To visualise the information, image or pattern, a second linear polarizer is needed. By rotating one polarizer the images changes from positive to negative. By tilting the device, the image, information or pattern becomes also visible without any additional tools; when tilted around one axis, a positive image results, and when tilted around the axis perpendicular to the former one, a negative image results. Such devices can be used also as optical variable security elements, for instance for protecting passports, banknotes, ID cards, documents, plastic cards, tickets, brands, pharmaceuticals, aircraft parts, automotive parts, watches, goods, etc. against tampering, alteration, falsification or duplication.

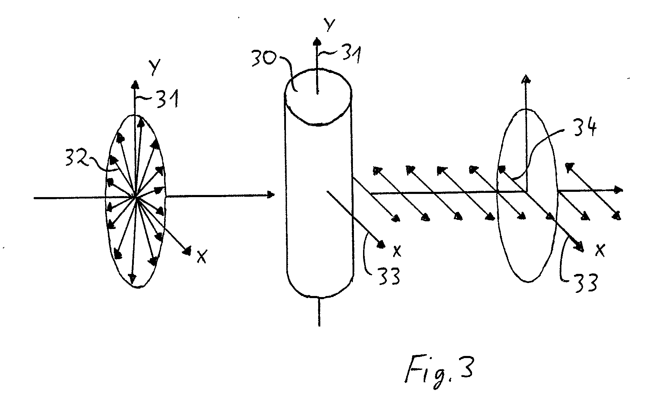

Figures 3 and 4 explain the functional principle of an LPP/LCP dichroic polarizer 6 and show schematically the configuration of the linear LPP/LCP dichroic polarizer 6. The dichroic dyes, one molecule 30 of L-type is shown in Fig. 3, have the properties to extinct in specific wavelength ranges one polarisation axis of light, here y-axis 31. The isotropic incident light 32 is therefore linearly polarized 34 according to the x-axis 33.

To get a 'black' LPP/LCP polarizer which shows a polarisation through broader wavelength bands (e.g. wavelength band of about 400 nm to 700 nm) several dichroic dyes (e.g. blue, red, yellow, purple) are blended together with the LCP host mixture. The normal, not polarised light passes through the structured linear polarizer (Fig. 4) and is therefore linearly polarised. With a second linear polarizer the remaining light can be blocked and it is possible to reveal the image, information or pattern.

The production of an LPP 26 and a dichroic LCP layer 16 that can be used according to the invention will be described in more detail below, still by way of example.

For the production of an LPP layer, suitable LPP materials are described for instance in patent publications EP-A-0 611 786, WO-A-96/10049 and EP-A-0 763 552, and include cinnamic acid derivatives and ferulic acid derivatives. For the foregoing Examples, the following LPP material was chosen:

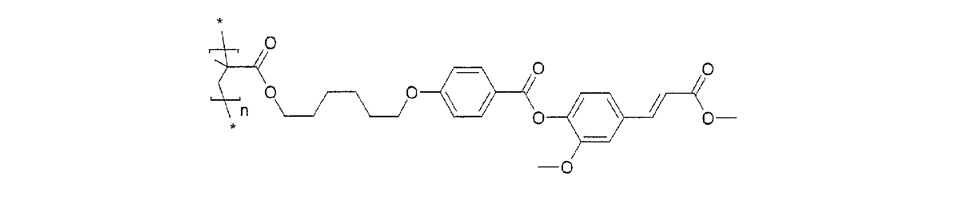

A 2 percent strength solution of the LPP material in MPK (methyl propyl ketone) was coated with a kbar coater (wire-coater); other coating techniques, such as spin-coating, gravur-coating, slot coating, etc. are also possible. The layer was then dried for 5 to 10 minutes at 130 °C on a hotplate. The layer was then exposed to linearly polarized light from a mercury high-pressure lamp for 10 to 550 seconds (depending on the strength of the lamp and on the characteristics of LPP and LCP layers) at room temperature. The layer was then used as an orientation layer for a liquid crystal material.

For the production of the dichroic LCP layers, in the examples the following diacrylate components were used as cross-linkable liquid crystal monomers:

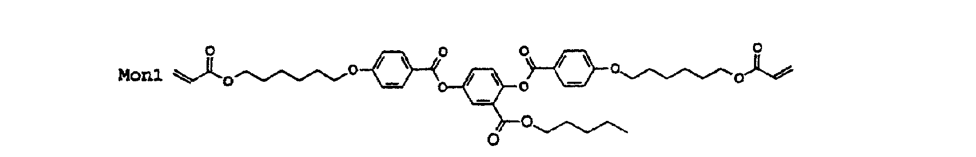

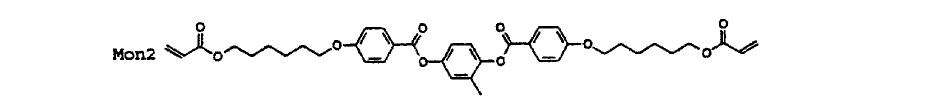

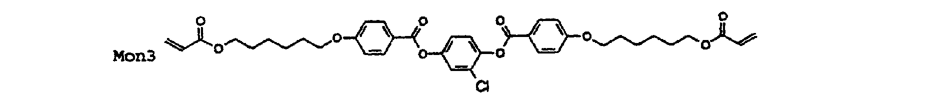

Using these components, a supercoolable nematic mixture M_{LCP} with particularly low melting point (Tm ∼ 35 °C) was developed, making it possible to prepare the LCP layer at room temperature. The diacrylate monomers were present with the following composition in the mixture: Mon1 80 %, Mon2 15 %, Mon3 5 %.

As dichroic dyes, a blue antraquinone dye B3 and a red azo dye R4 in concentration 2 weight% and 1 weight%, respectively, in the mixture M_{LCP} were used. The molecular structures of these two dichroic dyes are:

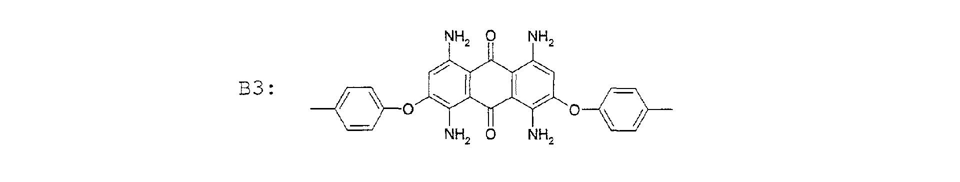

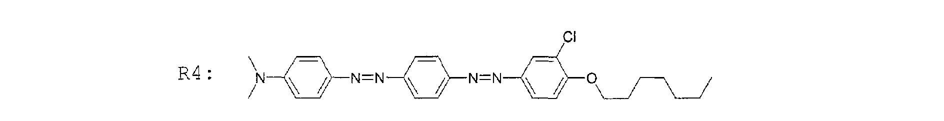

In addition a further 2 % of the Ciba-Geigy photo-initiator IRGACURE369 (trade mark) was added to the mixture.

The mixture M_{LCP} was then dissolved in anisol. By means of varying the M_{LCP} concentration in anisol, it was possible to adjust the LCP layer thickness over a wide range leading to different extinction values of the dichroic LPP/LCP polarizer. The LCP solution which includes the LCP host M_{LCP} and the dichroic dyes B3 and R4 was coated on top of the photo-exposed LPP layer by kbar coating (wire coater); however, also other coating techniques are possible, such as spin-coating, printing, etc. For photo-initiated cross-linking of the liquid crystal monomers, the layers were exposed to isotropic light from a xenon lamp for about 1 to 30 minutes (depending on the strength of the lamp) in an inert atmosphere.

## Claims

1. Polarizer film (1) comprising a liquid crystal polymer (LCP) layer (16) containing dichroic molecules (30), **characterized in that** the polarizer film (1) consists of a transfer foil (13; 3, 4) and a polarizer (6) comprising said liquid crystal polymer (LCP) layer (16).

2. Polarizer film according to claim 1, **characterized in that** the liquid crystal polymer (LCP) layer (16) is photo-aligned.

3. Polarizer film according to claim 1 or claim 2, **characterized in that** the liquid crystal polymer (LCP) layer (16) is in contact with a layer (26) of linearly photo-polymerizable material (LPP) exhibiting selective orientation.

4. Polarizer film according to claim 3, **characterized in that** the layer (26) of linearly photo-polymerizable material (LPP) is an alignment layer for the liquid crystal polymer (LCP) layer (16).

5. Polarizer film according to any one of claim 1 to 4, **characterized in that** the polarizer (6) is structured with a pattern of areas (11, 21) with different polarization directions (27, 28) through different mean orientation of the dichroic molecules (30).

6. Polarizer film according to any one of claim 1 to 5, **characterized in that** the transfer foil (13; 3, 4) comprises a carrier (3) and a release layer (4).

7. Polarizer film according to any one of claims 1 to 6, characterized in that the transfer foil (13; 3, 4) comprises a protective lacquer (5) and/or one or more additional LCP layers (16) containing dichroic molecules (30) and/or further structured or non-structured LCP layers (16), such as λ/4 plates, λ/2 plates, cholesteric layers.

8. Method for production of a polarizer film (1), transferable on a substrate (2), comprising the steps of
- providing a transfer foil (13; 3, 4) with a carrier (3) and a release layer (4) and optionally a lacquer layer (5),
- depositing a layer (26) of linearly photo-polymerizable material (LPP) on the release layer (4) or a lacquer layer (5),
- photoorienting the LPP layer (26),
- coating the LPP layer (26) with a liquid crystal polymer (LCP) layer (16) containing dichroic molecules (30), and
- cross-linking the liquid crystal polymer (LCP) layer (16).

9. Method for transferring a polarizer film (1) according to one of claims 1 to 7 on a substrate (2), using a hot-stamping process.
